Europäisches Patentamt

(19) European Patent Office

Office européen des brevets

(11) Publication number: **0 234 732**
**B1**

# EUROPEAN PATENT SPECIFICATION

(45) Date of publication of the patent specification:
28.03.90

(51) Int. Cl.⁴: **F16H 7/08**

(21) Application number: 87300593.8

(22) Date of filing: 23.01.87

(54) Automatic belt tensioner.

(30) Priority: 25.01.86 JP 14424/86

(43) Date of publication of application:
02.09.87 Bulletin 87/36

(45) Publication of the grant of the patent:
28.03.90 Bulletin 90/13

(84) Designated Contracting States:
DE GB

(56) References cited:
US-A- 3 252 347
US-A- 4 425 104

PATENT ABSTRACTS OF JAPAN, vol. 5,
no. 155 (M-90), 30th September 1981, page 137 M 90; &
JP - A - 56 83647 (YAMAHA HATSUDOKI) 08-07-1981

(73) Proprietor: FUJI JUKOGYO KABUSHIKI KAISHA,
7-2 Nishishinjuku 1-chome Shinjuku-ku, Tokyo(JP)

(72) Inventor: Sawafuji, Shuji, 2-35 Aoba-cho,
Higashimurayama-shi Tokyo(JP)
Inventor: Yoshikawa, Hiroshi, 1421 Oosawa, Mitaka-shi
Tokyo(JP)
Inventor: Ozawa, Masahiro, 1935-17 Amema,
Akikawa-shi Tokyo(JP)

(74) Representative: Shindler, Nigel et al, BATCHELLOR,
KIRK & EYLES 2 Pear Tree Court Farringdon Road,
London EC1R 0DS(GB)

## Description

The present invention relates to an automatic tensioner for tensing a belt such as a timing belt for an automotive engine and more particularly to a spring loaded screw type tensioner.

Japanese Patent Laid Open Nos. 56-83647 and 57-40149 (which corresponds to US-A 4 425 104) disclose screw type tensioners applied to chain driven camshaft mechanisms. The tensioner has a shaft applied with torque by a torsion spring and an actuating rod having a thread engaged with a thread of the shaft. The shaft is urged by the spring in a rotational direction to project the actuating rod. When the tension of the chain decreases as a result of stretching or expansion of the chain, the rod is caused to project further by the rotation of the shaft to push a chain guide, thereby automatically tensioning the chain.

In the screw type tensioner, since a large force is continuously exerted on the thread, a square threaded screw device having a high rigidity is employed. In the square threaded screw device, the quantity of particles produced by abrasion of the threads increases, due to high friction between the threads. Therefore, it is preferable to use oil having a low viscosity rather than grease for lubrication in order to flush out the particles. Accordingly, although the conventional tensioner can be applied to a chain drive device mounted inside an engine body in which engine oil splashes to lubricate the device, it cannot be applied to a timing belt drive device arranged outside the engine body.

The present invention starting from US-A 4 425 104 which discloses the features of the first part of claim 1 seeks to provide an automatic belt tensioner wherein a reliably sealed lubricating system is provided so as to sufficiently flush out particles resulting from the abrasion of screw threads.

Accordingly the present invention provides an automatic belt tensioner as defined in claim 1.

A preferred from of the invention provides an automatic belt tensioner comprising a substantially vertically disposed cylindrical housing having an axial chamber, a shaft mounted on the housing and having an oil reservoir in a lower portion thereof and having an external thread, a torsion spring provided between the housing and the shaft so as to urge the shaft in a rotational direction, and a cylindrical plunger having an axial bore and an internal thread provided at an intermediate portion with respect to the axial length of the bore and engaged with the external thread of the shaft.

A lower end of the plunger projects from the housing so as to be operatively connected to a tension pulley for a belt. The plunger is guided by guide means so as to be axially moved.

The torsion spring and both the threads are arranged to project the plunger by the rotation of the shaft urged by the torsion spring.

In accordance with one aspect of the invention, the circulating means comprises a passage provided in the shaft so as to provide communication between the oil reservoir and the bore above the internal thread of the rod, and an air passage provided in the shaft to connect the oil reservoir with the atmosphere.

One embodiment of the invention will now be described by way of example with reference to the accompanying drawings, in which:

Figure 1 is an elevational view of a timing belt drive device for an engine to which the present invention is applied;

Figure 2 is a partial sectional view of a part of Figure 1;

Figure 3 is a fragmentary sectional view of an automatic tensioner of the present invention; and

Figure 4 is a sectional view taken along a line IV-IV of Figure 3.

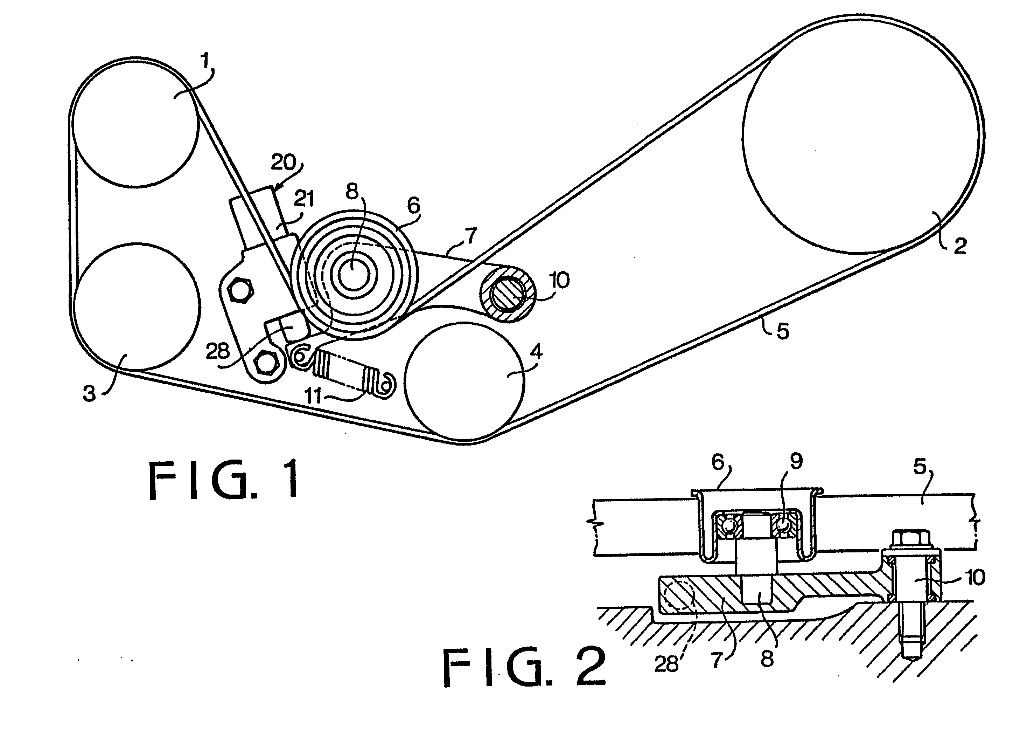

Referring to Figures 1 and 2, a crankshaft pulley 1 is connected to a camshaft pulley 2 through a toothed timing belt 5. An oil pump pulley 3 and an idler pulley 4 engages with the belt at the tight side of the run of the belt 5. A tension pulley 6 bears on the belt 5 at the slack side. The tension pulley 6 is rotatably supported on a central portion of an arm 7 through a bearing 9 mounted on a shaft 8. One end of the arm 7 is rotatably secured to an engine body by a shaft 10. An automatic tensioner 20 is provided adjacent to the other end of the arm 7. A tension spring 11 is provided to urge the arm 7 to assist the automatic tensioner 20 so as to decrease the vibration of the belt.

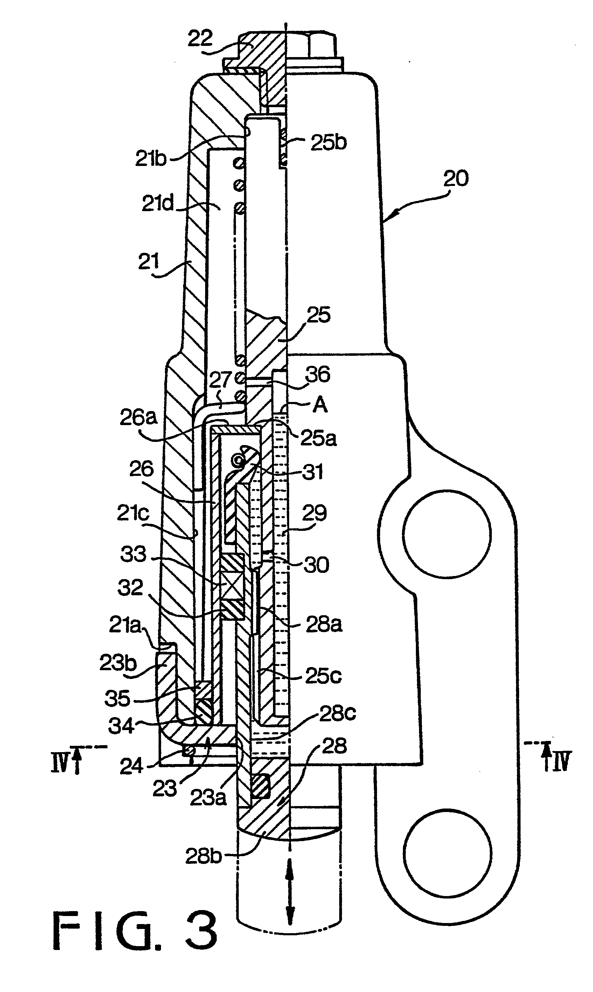

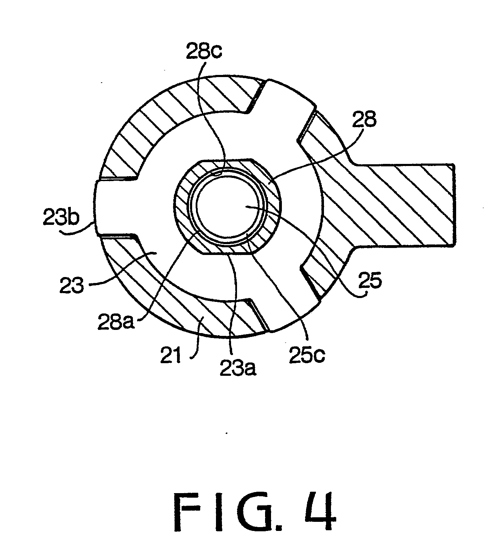

Referring to Figures 3 and 4 the automatic tensioner 20 has a cylindrical body or housing 21 having an axial chamber 21d. A bolt 22 is screwed in the body to cover an opening at the top of the body 21.

A shaft 25 is axially disposed in the chamber 21d of the body 21. The upper end of the shaft 25 is rotatably mounted in a recess 21b formed in the body 21. The shaft 25 has a relatively large diameter upper portion and a smaller diameter lower portion, so that an annular shoulder 25a is formed between them. The smaller diameter portion engages in an aperture of corresponding diameter in the end 26a of a hollow tubular member 26. Disposed around the upper portion of the shaft 25 is a torsion spring 27, one end of which is engaged with a bore 25b formed on the top of the shaft and the other end to a groove 21c formed in the inner wall of the body 21, so as to apply torque to the shaft 25. An external square thread 25c is formed on the smaller diameter lower portion of the shaft 25. An oil reservoir 29 containing a low viscosity lubricating oil A is formed within the lower portion cotherend of shaft 25.

A cylindrical plunger 28 has a bore 28c and an internal thread 28a at an intermediate position along the axial length of the bore. The plunger 28 is mounted in the hollow member 26, engaging the thread 28a with the thread 25c of the shaft 25 thus forming a helical mounting. The plunger 28 projects downwardly out of the body 21. A head portion 28b is formed at the bottom end for abutting against the arm 7.

A radial oil passage 30 is formed in the wall of the shaft 25 at a portion above the engaging portion of the threads 25c and 28a so as to connect the oil reservoir 29 with a space formed between the shaft 25 and the plunger 28. A stem seal 31 is mounted between the top end of the plunger 28 and the shaft 25 so as to prevent the oil from leaking out of the plunger 28. An oil seal 33 is arranged at an intermediate position with respect to the axial length of the plunger 28 between the hollow member 26 and the plunger 28, and is secured by back-up rings 32. Thus, the oil is prevented from leaking out. An oil seal 34 and an O-ring 35 are provided in the space between the body 21 and the member 26 thereby preventing the leakage of oil from the body 21.

A radial air passage 36 is formed in the wall of the shaft 25 at a position above the level of the oil A. A circular bearing 23 is formed with an elongated guide opening 23a at the centre and having upwardly projecting engaging legs 23b at the periphery. The bearing 23 is attached to the bottom end of the body 21 and secured thereto by a snap ring 24. Each engaging leg 23b engages with a corresponding groove 21a formed on a lower periphery of the body 21. The lower portion of plunger 28 has two opposed flats corresponding to the shape of the opening 23a of the bearing 23, so that the plunger 28 is located in position by the bearing in such a way that it can be axially moved without rotating. The bearing 23 supports the member 26 and hence the shaft 25. The spring 27 and threads 25c and 28a are so arranged that when the shaft 25 is rotated by spring 27, the plunger 28 projects as shown by a chain line in Figure 3.

In operation, the plunger 28 is urged by spring 27 to project, thereby rocking the arm 7 about the shaft 10 so that the tension pulley 6 is urged against the timing belt 5. At a position where the component of rotary force at the thread 28 a is generated by the reaction of the belt 5, balances with the torque of the torsion spring 27, the tension pulley 6 is held to provide a proper belt tension. When the crankshaft 1 is rotated, the timing belt 5 guided by the idler pulley 4 and the tension pulley 6 drives the camshaft pulley 2 and the oil pump pulley 3 in synchronism with the crankshaft 1.

When load on the slack side of the belt 5 is decreased, for example, at the start of the engine, plunger 28 is temporarily projected. During the normal operation of the engine, the plunger 28 is projected and retracted in accordance with expansion of the belt at warm-up and with contraction of the belt at cold starting. Accordingly, the tension of the belt is automatically kept at a predetermined value by the tension pulley 6.

When the plunger 28 is projected increasing the volume of the space in the plunger, oil A in the oil reservoir 29 flows through the oil passage 30 into the space between plunger 28 and shaft 25 (secondary chamber). At the same time, air is inducted into the oil reservoir 29 through the air passage 36.

On the other hand, when the plunger 28 is retracted decreasing the size of the space, the oil A in the space returns to the oil reservoir 29 through the passage 30 while the air in the oil reservoir 29 is discharged through the air passage 36. Since the level of the oil A is always shown above the threads 28a and 25c, the threads are thoroughly lubricated. Accordingly, the particles caused by abrasion of the threads collect in the bottom of the space in the plunger 28.

The oil in the plunger 28 is prevented from leaking by the stem seal 31. Even if excessive oil is discharged out of the plunger 28, oil seals 33 and 34 prevent it from flowing out of the body 21.

Accordingly the preferred form of the present invention provides an automatic tensioner which can be applied to a timing belt since lubricating oil is trapped inside the tensioner by reliable sealing means. Further, since the tensioner has its own oil reservoir it can be used independently in many other applications.

## Claims

1. An automatic belt tensioner comprising a housing (21); a plunger (28) threadedly mounted in a helical mounting (25, 25c, 28a) in the housing with one end projecting so that rotation of the helical mounting causes the plunger (28) to move axially in the housing, a torsion spring (27) connected between the housing and the helical mounting so as to urge the plunger (28) outwardly of the housing for engagement, in use, with a belt; characterised by the provision of an oil reservoir (29) and circulating means for circulating the oil over threads (25c; 28a) of the helical mounting between the reservoir (29) and secondary chamber when the helical mounting is rotated.

2. An automatic belt tensioner according to claim 1, characterised in that the helical mounting comprises a shaft (25) mounted for rotation in the housing (21) and engaged at one end by said torsion spring (27), the other end of the shaft (25) being provided with an external thread (25c) for threaded engagement with an internal thread (28a) in an axial bore in the plunger (28), said oil reservoir (29) being formed within the other end of the shaft (25), the secondary chamber being provided within a bore of the plunger (28) and the circulating means comprising an air passage (36) connecting an air space in the reservoir (29) with the atmosphere and an oil passage (30) connecting the reservoir (29) with the secondary chamber.

## Patentansprüche

1. Ein automatischer Riemenspanner mit einem Gehäuse (21); einem Stempel (28), der in einer Schraubbefestigung (25, 25c, 28a) im Gehäuse geschraubt befestigt ist, wobei ein Ende herausragt, so daß eine Rotation der Schraubbefestigung den Stempel (28) axial im Gehäuse bewegt, einer Torsionsfeder (27), die zwischen dem Gehäuse und der Schraubbefestigung verbunden ist, um den Stempel (28) aus dem Gehäuse heraus während der Benutzung in Eingriff mit einem Riemen zu drücken; gekennzeichnet durch die Schaffung eines Ölreservoirs (29) und von Umlaufmitteln zur Zirkulierung des Öls über Gewinde (25c; 28a) der Schraubbefestigung zwischen dem Reservoir (29) und einer Nebenkammer, wenn die Schraubbefestigung gedreht wird.

2. Ein automatischer Riemenspanner nach Anspruch 1, dadurch gekennzeichnet, daß die Schraubbefestigung eine Welle (25) aufweist, die für die Rotation im Gehäuse (21) befestigt ist und sich mit ihrem einen Ende mit der Torsionsfeder (27) in Eingriff befindet, wobei das andere Ende der Welle (25) mit einem Außengewinde (25c) für einen Schraubeingriff mit einem Innengewinde (28a) in einer axialen Bohrung im Stempel (28) versehen ist, das Ölreservoir (29) innerhalb des anderen Endes der Welle (25) ausgebildet ist, die Nebenkammer innerhalb einer Bohrung des Stempels (28) versehen ist und die Umlaufmittel einen Luftkanal (36), der einen Luftraum im Reservoir (29) mit der Atmosphäre verbindet, und einen Ölkanal (30) aufweisen, der das Reservoir (29) mit der Nebenkammer verbindet.

## Revendications

1. Un tendeur de courroie automatique comprenant un corps (21);
un poussoir (28) qui est vissé dans une monture hélicoïdale (25, 25c, 28a) dans le corps, avec une extrémité faisant saillie hors du corps, de façon que la rotation de la monture hélicoïdale déplace axialement le poussoir (28) dans le corps, un ressort de torsion (27) monté entre le corps et la monture hélicoïdale, de façon à solliciter le poussoir (28) vers l'extérieur du corps, pour qu'il vienne en contact avec une courroie, pendant l'utilisation, caractérisé par l'existence d'un réservoir d'huile (29) et de moyens de circulation destinés à faire circuler l'huile sur des filets (25c; 28a) de la monture hélicoïdale, entre le réservoir (29) et une chambre secondaire, lorsque la monture hélicoïdale tourne.

2. Un tendeur de courroie automatique selon la revendication 1, caractérisé en ce que la monture hélicoïdale comprend une tige (25) qui est montée de façon à pouvoir tourner dans le corps (21), et dont une extrémité vient en contact avec le ressort de torsion (27), l'autre extrémité de la tige (25) comportant un filetage externe (25c) qui est prévu pour se visser dans un filetage interne (28a) formé dans un alésage axial dans le poussoir (28), le réservoir d'huile (29) étant formé à l'intérieur de l'autre extrémité de la tige (25), la chambre secondaire étant formée à l'intérieur d'un alésage du poussoir (28), et les moyens de circulation comprenant un passage d'air (36) qui fait communiquer un espace d'air dans le réservoir (29) avec l'atmosphère, et un passage d'huile (30) qui fait communiquer le réservoir (29) avec la chambre secondaire.

FIG. 1

FIG. 2

EP 0 234 732 B1

FIG. 3

F I G. 4